# EUROPÄISCHE PATENTANMELDUNG

(11) **EP 1 408 362 A1**
(43) Veröffentlichungstag der Anmeldung: **14.04.2004**
(21) Anmeldenummer: 03023115.3
(22) Anmeldetag: 10.10.2003
(51) Int. Cl.: G02B 27/12, B60Q 1/26

(54) **Leuchte, insbesondere Fahrzeugleuchte**

(30) Priorität: 10.10.2002 DE 10247328; 23.12.2002 DE 20219896 U; 24.02.2003 DE 10307806
(71) Anmelder: FER Fahrzeugelektrik GmbH, 99819 Eisenach (DE)
(72) Erfinder: Wimbert, Frank, 99817 Eisenach (DE); Deichmüller, Horst, 99817 Eisenach (DE)
(74) Vertreter: Strasser, Wolfgang, Dipl.-Phys.

(57) **Zusammenfassung**

Eine Leuchte, insbesondere Kraftfahrzeugleuchte, umfaßt eine Lichtverteilungsvorrichtung (14, 14') in die das Licht wenigstens einer Lichtquelle (6) so eingespeist wird, dass ein Lichtstrom entsteht, der sich durch die Lichtverteilungsvorrichtung zunächst in etwa parallel zu einer von ihr definierten Lichtdurchtrittsfläche ausbreitet. Mit Hilfe von Auskoppelstrukturen (16, 16') werden aus dem Lichtstrom Anteile für eine Abgabe durch die Lichtaustrittsfläche hindurch umgelenkt. Zur Erzielung einer guten Ausleuchtung der Lichtdurchtrittsfläche sind die Auskoppelstrukturen mehrere in Ausbreitungsrichtung des Lichtstroms hintereinander in Abständen angeordnete Auskoppelschichten, die aus einem Medium bestehen, dessen optischer Brechungsindex von dem des Mediums verschieden ist, das die Zwischenräume zwischen diesen Schichten erfüllt, wobei die Auskoppelschichten gegen die Ausbreitungsrichtung des Lichtstroms unter einem vorgegebenen Winkel so geneigt sind, dass sein Hauptteil ohne wesentliche Richtungsänderung durch. sie hindurchtritt, während ein kleinerer Teil zur Lichtdurchtrittsfläche hin reflektiert wird.

## Beschreibung

Die Erfindung betrifft eine Leuchte, insbesondere eine Fahrzeugleuchte gemäß dem Oberbegriff von Anspruch 1.

Insbesondere durch den Einsatz von hochgesetzen Bremsleuchten von Kraftfahrzeugen ist ein Bedarf für Fahrzeugleuchten entstanden, deren Lichtdurchtrittsscheibe in der Einbauposition quer zur Blickrichtung des Betrachters eine große Länge und eine im Vergleich hierzu geringe Höhe aufweisen.

Um die Lichtdurchtrittsscheibe einer solchen Leuchte gleichmäßig zu durchleuchten, ist es nach dem Stand der Technik üblich, hinter ihr wenigstens eine langgestreckte Reihe von nebeneinander positionierten Lichtquellen vorzusehen, bei denen es sich meistens um Leuchtdioden handelt. Für etwas höhere Bauformen können auch mehrere solcher langgestreckten Reihen übereinander angeordnet sein.

Nachteilig an diesen bekannten Leuchten ist die große Anzahl einzelner Lichtquellen, die zu einem vermehrten Halterungs- und Verdrahtungsaufwand und zu einem erhöhten Ausfallrisiko führt. Dabei ist besonders nachteilig, daß der Fahrer des betreffenden Kraftfahrzeuges den Ausfall von einigen wenigen dieser vielen Lichtquellen entweder überhaupt nicht wahrnimmt oder für belanglos hält und daher nicht für einen raschen Austausch sorgt. Insbesondere dann, wenn der Ausfall einzelner Lichtquellen dazu führt, daß ein nachfolgender Verkehrsteilnehmer die hochgesetzte Bremsleuchte nicht mehr als einheitliche sondern als zwei getrennte Leuchten wahrnimmt, kann dies insbesondere bei schlechten Sichtverhältnissen zu erheblichen Irritationen führen.

Weiterhin ist aus EP 1 022 187 eine Fahrzeugleuchte bekannt, bei der das Licht einer oder mehrerer Leuchtdioden in die Stirnseite eines langgestreckten, gekrümmten Lichtleitkörpers eingekoppelt wird, der einen Teil dieses Lichts durch Totalreflexion um seine Krümmung herumführt, um ihn an der gegenüberliegenden Stirnseite abzustrahlen, während andere Lichtanteile durch stufenartige Auskoppelstrukturen, die in die hintere Hauptfläche des Lichtleitkörpers eingearbeitet sind, umgelenkt und durch die vordere Hauptfläche abgestrahlt werden.

Der Erfindung liegt die Aufgabe zugrunde, eine Leuchte der eingangs genannten Art so weiterzubilden, daß eine weitgehend gleichmäßige Ausleuchtung einer flächigen Lichtdurchtrittsscheibe auch mit einer kleinen Anzahl von Lichtquellen möglich wird.

Zur Lösung dieser Aufgabe sieht die Erfindung die im Anspruch 1 niedergelegten Merkmale vor.

Da die auszuleuchtende Lichtdurchtrittsscheibe nicht notwendiger Weise eben sein muß, ist es zweckmäßig, von einer zu durchleuchtenden Lichtdurchtrittsfläche zu sprechen, bei der es sich um die "Grundrißfläche" Lichtdurchtrittsscheibe handelt, die man sich als Parallelprojektion der Lichtdurchtrittsscheibe entgegen der Hauptabstrahlrichtung der Leuchte auf eine hinter der Lichtdurchtrittsscheibe liegende Ebene denken kann. Diese Lichtdurchtrittsfläche kann die Oberfläche eines festen Körpers oder immateriell sein. Ersteres ist bei Lichtdurchtrittsscheiben mit ebener Rückseite der Fall, die dann gleich der besagten Lichtdurchtrittsfläche ist.

Gemäß der im Anspruch 1 niedergelegten Lösung, die prinzipiell mit einer einzigen Lichtquelle ausreichender Lichtstärke auskommt, wird das von dieser Lichtquelle ausgehende Lichtbündel so gerichtet, daß es sich in etwa parallel zur Lichtdurchtrittsfläche ausbreitet. Der Ausdruck "in etwa parallel" soll dabei auch die Fälle mit umschließen, in denen die Hauptausbreitungsrichtung des Lichtbündels mit dieser Fläche einen kleinen, spitzen Winkel einschließt.

Im Weg des Lichtbündels ist eine Lichtverteilungsvorrichtung angeordnet, die mehrere Auskoppelschichten umfaßt, die gegen die Längsrichtung des Lichtbündels unter einem Winkel, vorzugsweise um 45° geneigt sind. Diese Auskoppelschichten können beispielsweise aus einem transparenten Festkörpermaterial bestehen und sind dann vorzugsweise mit Hilfe von Verbindungsstegen einstückig miteinander verbunden, die sich außerhalb des Lichtbündels oder in seinen Randbereichen befinden können, die nicht unmittelbar an die Lichtdurchtrittsscheibe angrenzen.

Alternativ hierzu ist es möglich, daß die Auskoppelschichten von mit Luft erfüllten, in einem transparenten Festkörper ausgebildeten Schlitzen gebildet werden.

Wesentlich ist in beiden Fällen, daß die optischen Brechungsindizes des die Auskoppelschichten erfüllenden Mediums einerseits und des sie umgebenden Mediums andererseits so verschieden sind, daß bei dem gegebenen Neigungswinkel bei jedem Durchtritt des parallelisierten Lichtbündels durch eine dieser Auskoppelschichten ein bestimmter Teil des Lichtes, beispielsweise 10 % quer, vorzugsweise senkrecht zur Längsachse des parallelisierten Lichtbündels durch Grenzflächen-Reflexion zur Lichtdurchtrittsfläche hin ausgekoppelt wird.

Jede dieser Auskoppelschichten wirkt somit für einen Betrachter,' der von außen auf die Lichtdurchtrittsfläche blickt, wie eine eigene Lichtquelle.

Da die Intensität des ausgekoppelten Lichtanteils immer proportional zur Intensität des auf die betreffende Auskoppelschicht auftreffenden Lichtes ist, nimmt die Intensität des an jeder einzelnen Auskoppelschicht ausgekoppelten Lichtanteils mit zunehmender Entfernung von der Lichtquelle ab, da das sich in Längsrichtung ausbreitende, parallelisierte Lichtbündel aufgrund der Auskopplungsverluste mit zunehmender Entfernung immer schwächer wird.

Um beispielsweise eine langgestreckte Lichtdurchtrittsfläche dennoch zumindest so gleichmäßig auszuleuchten, daß keine für das menschliche Auge auffälligen Helligkeitsunterschiede auftreten, sieht die Erfindung verschiedene Lösungsmöglichkeiten vor:

Eine Möglichkeit besteht darin, zwei Lichtbündel zu verwenden, die von ein und derselben oder zwei verschiedenen Lichtquellen abgeleitet sein können und diese beiden Lichtbündel in etwa parallel zur Lichtdurchtrittsfläche aber mit entgegengesetzter Ausbreitungsrichtung, d.h. gegensinnig verlaufen zu lassen, wobei jedes der beiden Lichtbündel eine eigene Lichtverteilungsvorrichtung der oben beschriebenen Art besitzt. Durch diese Anordnung wird erreicht, daß in den Bereichen der Lichtdurchtrittsfläche, in denen aus dem einen Lichtbündel nur noch Anteile mit vergleichsweise geringer Intensität ausgekoppelt werden, die Intensität der im gleichen Bereich aus dem anderen Lichtbündel ausgekoppelten Anteile besonders hoch ist und umgekehrt. In der Mitte der Anordnung liefern dabei beide Lichtbündel Anteile mit in etwa gleicher Intensität.

Eine weitere Möglichkeit besteht darin, nur ein Lichtbündel zu verwenden und die Anzahl der Auskoppelschichten mit zunehmendem Abstand von der Lichtquelle zu erhöhen, so daß in den Bereichen, in denen die ausgekoppelten Lichtanteile eine geringere Intensität besitzen, deren Anzahl größer ist als in den Bereichen, in denen die Intensität eines jeden ausgekoppelten Anteils hoch ist.

Diese Erhöhung der Anzahl der je Abstands-Längeneinheit vorgesehenen Auskoppelschichten kann mit fortschreitendem Abstand von der Lichtquelle entweder kontinuierlich oder in dem Sinn stufenweise erfolgen, daß zumindest in größerer Entfernung eng beieinander liegende Gruppen von Auskoppelschichten so ausgebildet werden, daß zwar die mittleren Abstände zwischen den einzelnen Gruppen und den einzelnen Auskoppelschichten innerhalb jeder Gruppe in etwa gleich bleiben, sich aber die Anzahl der pro Gruppe vorgesehenen Auskoppelschichten mit zunehmendem Abstand von der Lichtquelle immer mehr erhöht.

Es liegt auch im Rahmen der vorliegenden Erfindung, zwei oder mehrere der eben beschriebenen Vorgehensweise miteinander zu kombinieren.

Eine andere Möglichkeit besteht darin, ein einziges parallelisiertes Lichtbündel vorzusehen, das nach Durchlaufen seiner Lichtlenkvorrichtung durch eine Spiegelfläche in sich selbst zurückgeworfen wird, so daß der verbleibende Rest die Lichtlenkvorrichtung in entgegengesetzter Richtung durchläuft. Dabei wird bei jedem Durchtritt durch eine Auskoppelfläche ein Teil des zurücklaufenden Lichtbündels in der zur Lichtdurchtrittsfläche entgegengesetzten Richtung ausgekoppelt. Auf der der Lichtdurchtrittsfläche gegenüberliegenden Seite der Lichtlenkvorrichtung ist daher eine Reflektoranordnung vorgesehen, die diese nach hinten ausgekoppelten Lichtanteile zur Lichtdurchtrittsfläche hin reflektiert. Die Intensität der aus dem zurücklaufenden Lichtbündel ausgekoppelten Anteile ist in unmittelbarer Nähe der Spiegelfläche am größten und nimmt mit zunehmender Annäherung an die Lichtquelle ab, was zur Intensitätsveränderung der Anteile, die aus dem von der Lichtquelle zur Spiegelfläche hin verlaufenden Lichtbündel ausgekoppelt werden, gerade entgegengesetzt ist. Da sich die Intensitäten der aus dem vorlaufenden Lichtbündel und der aus dem zurücklaufenden Lichtbündel ausgekoppelten Anteile an jeder Stelle der Lichtlenkvorrichtung addieren, ergibt sich hier eine weitgehende Kompensation der mit zunehmendem Abstand von der Lichtquelle auftretenden Intensitätsabnahme der einzelnen ausgekoppelten Anteile.

Bei den Auskoppelschichten kann es sich um planparallele oder gekrümmt parallele Schichten handeln. Unter "gekrümmt parallelen Schichten" werden hier solche Schichten verstanden, deren Grenzflächen zueinander immer in etwa den gleichen Abstand besitzen, obwohl sie gekrümmt verlaufen. Dieser krumme Verlauf kann entweder einem Poligonzug folgen oder stetig mit gleichbleibendem oder sich veränderndem Krümmungsradius sein.

Zur Erzielung spezieller Lichtverteilungen können die Winkel, unter denen die Auskoppelschichten schräg zur Längsachse des Lichtbündels verlaufen, unterschiedlich sein. Auch ist es möglich, die Auskoppelschichten gegen die Vertikale gekippt anzuordnen.

Es sei ausdrücklich darauf hingewiesen, daß die erfindungsgemäßen Maßnahmen mit Vorteil nicht nur bei Fahrzeugleuchten eingesetzt werden können, die eine im Vergleich zu ihrer Länge geringe Höhe besitzen, wie dies bei hochgesetzten Bremsleuchten meist der Fall ist. Bei Fahrzeugleuchten, die eine größere Höhe besitzen, können vielmehr mehrere Lichtquellen übereinander angeordnet werden, deren paralleleisierte Lichtbündel dann hinter der Lichtdurchtrittsfläche nebeneinander so parallel zu dieser durch eine gemeinsame oder voneinander getrennte Lichtlenkvorrichtungen verlaufen, daß die ausgekoppelten Anteile die Lichtdurchtrittsfläche mit weitgehend gleichmäßiger Helligkeit ganzflächig durchstrahlen.

Die im Zusammenhang mit der Einbaulage von hochgesetzen Bremsleuchten verwendeten Begriffe "oben" bzw. "unten" sowie "horizontal" sind nicht einschränkend zu verstehen, da eine erfindungsgemäße Fahrzeugleuchte im Bedarfsfall auch so eingebaut werden kann, daß sich das oder die parallelisierten Lichtbündel beim Durchlaufen der zugehörigen Lichtlenkvorrichtung(en) von oben nach unten oder von unten nach oben erstrecken.

Weiterhin ist es möglich, nicht nur schmale, langgestreckte sondern nahezu beliebig geformte, großflächige Lichtdurchtrittsöffnungen beziehungsweise Lichtscheiben mit Hilfe einer einzigen oder einiger weniger Lichtquellen gleichmäßig von innen beziehungsweise hinten her zu durchleuchten. Dabei muß die Anordnung keineswegs durchgehend bzw. vollständig radialsymmetrisch ausgebildet sein. Prinzipiell genügt es, wenn sich eine erfindungsgemäße Lichtleitvorrichtung vom Zentrum ausgehend mit ihren planparallelen Auskoppelschichten nur in einen Sektor hinein erstreckt, der einen Öffnungswinkel beliebiger Größe, beispielsweise auch von nur einigen wenigen Grad besitzen kann.

Erfindungsgemäß ist es auch möglich, mehrere solche Sektoren um ein Zentrum herum anzuordnen, die sich winkelmäßig direkt aneinander anschließen oder voneinander durch dazwischen liegende Sektoren getrennt sind, in denen keine erfindungsgemäße Lichtleitvorrichtung vorgesehen ist. In all diesen verschiedenen Sektoren können die Lichtleitvorrichtungen gleich oder zum Beispiel in der Weise voneinander verschieden ausgebildet sein, daß sie eine unterschiedliche Anzahl von Auskoppelschichten umfassen und/oder diese Schichten in unterschiedlichen radialen Abstände vom Zentrum angeordnet sind.

Diese und weitere vorteilhafte Merkmale und Ausgestaltungen einer erfindungsgemäßen Leuchte sind in den Unteransprüchen niedergelegt.

Die Erfindung wird im folgenden anhand von Ausführungsbeispielen unter Bezugnahme auf die Zeichnung beschrieben; in dieser zeigen:
- Fig. 1a: einen Horizontalschnitt durch eine erfindungsgemäße Leuchte mit zwei in etwa parallelen Lichtbündeln, deren Achsen in etwa zusammenfallen und die einander entgegengerichtet durch zwei ineinander verschachtelte Lichtverteilungsvorrichtungen verlaufen,
- Fig. 1b: in vergrößertem Maßstab ein Detail aus Fig. 1a,
- Fig. 2a: eine der Fig. 1 a entsprechende Darstellung einer erfindungsgemäßen Leuchte, bei der die beiden einander entgegengerichteten in etwa parallelen Lichtbündel und ihre jeweils zugehörige Lichtverteilungsvorrichtung von der Lichtaustrittsfläche her gesehen hintereinander angeordnet sind,
- Fig. 2b: in vergrößertem Maßstab ein Detail aus Fig. 2a,
- Fig. 3a: eine der Ansicht der Fig. 1a entsprechende Ansicht einer dritten Ausführungsform einer erfindungsgemäßen Leuchte, bei der die beiden einander entgegengerichteten, in etwa parallelen Lichtbündel und ihre zugehörigen Lichtverteilungsvorrichtungen von der Lichtaustrittsfläche her gesehen nebeneinander angeordnet sind, so daß sich jedes der Lichtbündel nur in etwa bis zur Mitte der Anordnung ausbreitet,
- Fig. 3b: in vergrößertem Maßstab ein Detail aus Fig. 3a,
- Fig. 4: in stark schematisierter Form eine der Fig. 3a entsprechende Ansicht einer weiteren Ausführungsform einer erfindungsgemäßen Leuchte, bei der jedoch die Auskoppelschichten von mit Luft erfüllten Schlitzen in einem transparenten Festkörper gebildet werden,
- Fig. 5: einen der Fig. 3b entsprechenden Teil-Horizontalschnitt durch eine erfindungsgemäße Leuchte, bei der die Auskoppelschichten von stetig gekrümmten Platten mit zueinander "parallelen" Grenzflächen gebildet werden,
- Fig. 6: einen der Fig. 5 entsprechenden Teil-Horizontalschnitt durch eine erfindungsgemäße Leuchte, bei der die Auskoppelschichten von gekrümmten Platten mit zueinander "parallelen" Grenzflächen gebildet werden, wobei die Krümmung einem Poligonzug folgt,
- Fig. 7: einen schematischen Teil-Horizontalschnitt durch die Lichtverteilungsvorrichtung einer erfindungsgemäßen Leuchte, bei der die Auskoppelschichten von planparallelen Platten gebildet werden, die unter unterschiedlichen Neigungswinkeln quer zur Längsrichtung des parallelisierten Lichtbündels verlaufen,
- Fig. 8: einen schematisierten Horizontalschnitt durch die Lichtverteilungsvorrichtung einer erfindungsgemäßen Leuchte, an deren Ende das von der Lichtquelle kommende Lichtbündel in sich selbst reflektiert wird,
- Fig. 9: einen stark schematisierten Horizontalschnitt durch zwei einstückig miteinander verbundene, nebeneinander angeordnete Lichtverteilungsvorrichtungen für zwei einander gegenüberliegende Lichtquellen, deren Lichtbündel sich durch beide Lichtverteilungsvorrichtungen ausbreiten,
- Fig. 10: die Vorderansicht einer erfindungsgemäßen Leuchte mit Lichteinkoppelbereichen sowohl an den beiden Stirnenden als auch in der Mitte ihrer linearen Erstreckung,
- Fig. 11: die Rückansicht der Leuchte aus Fig. 10,
- Fig. 12: einen Schnitt durch die Leuchte aus den Fig. 10 und 11 längs der Linie XII-XII,
- Fig. 13: eine Vorderansicht auf eine erfindungsgemäße Leuchte mit kreisförmiger Lichtaustrittsfläche, bei der die zentral angeordnete Lichtquelle direkt sichtbar ist,
- Fig. 14: einen Schnitt durch die Leuchte aus Fig. 13 längs der Linie XIV-XIV,
- Fig.15: eine der Fig. 13 entsprechende Draufsicht auf eine erfindungsgemäße Leuchte mit einer geringfügig modifizierten Lichtverteilungsvorrichtung, bei der der Schnitt längs der Linie XIV-XIV aus Fig. 14 unverändert ist,
- Fig. 16: eine Draufsicht auf eine weitere Ausführungsform einer erfindungsgemäßen Leuchte mit kreisförmiger Lichtaustrittsfläche, bei der die zentrale Lichtquelle von außen nicht direkt sichtbar ist,
- Fig. 17: einen Schnitt durch die Leuchte aus Fig. 16 längs der Linie XVII- XVII,
- Fig. 18: einen Fig. 17 entsprechenden Schnitt durch eine weitere Ausführungsform einer erfindungsgemäßen Leuchte mit einer zentral angeordneten Leuchtdiode, in deren Gehäuse eine Reflektoranordnung integriert ist,
- Fig. 19: eine der Fig. 17 entsprechende Schnittansicht durch eine erfindungsgemäße Leuchte mit einer zentral angeordneten Leuchtdiode und einem mit der Lichtverteilungsvorrichtung einstückig verbundenen Lichtleitkörper, der sowohl als Lichtsammellinse als auch als Reflektoranordnung dient,
- Fig. 20: eine Fig. 17 entsprechende Schnittansicht durch eine weitere Ausführungsform einer erfindungsgemäßen Leuchte mit einer vor der zentral angeordneten Leuchtdiode positionierten Sammellinse und einer in die Lichtverteilungsvorrichtung integrierten Reflektoranordnung,
- Fig. 21: eine der Fig. 13 entsprechende Draufsicht auf eine erfindungsgemäße Leuchte, bei der die Lichtaustrittsfläche und die Lichtscheibe eine von der Kreisform abweichende Form besitzen
- Fig. 22: die Vorderansicht einer kreisförmigen erfindungsgemäßen Leuchte, bei der die Lichteinkoppelung nicht vom Zentrum her sondern durch mehrere auf einem konzentrischen Kreis angeornete Leuchtdioden erfolgt,
- Fig. 23: die Rückansicht der Leuchte aus Fig. 22,
- Fig. 24: in vergrößertem Maßstab einen Schnitt durch die Leuchte aus den Fig. 22 und 23 längs der Linie XXIV- XXIV und
- Fig. 25: in noch stärkerer Vergrößerung das durch den Kreis XXV in Fig. 24 hervorgehobene Dtail.

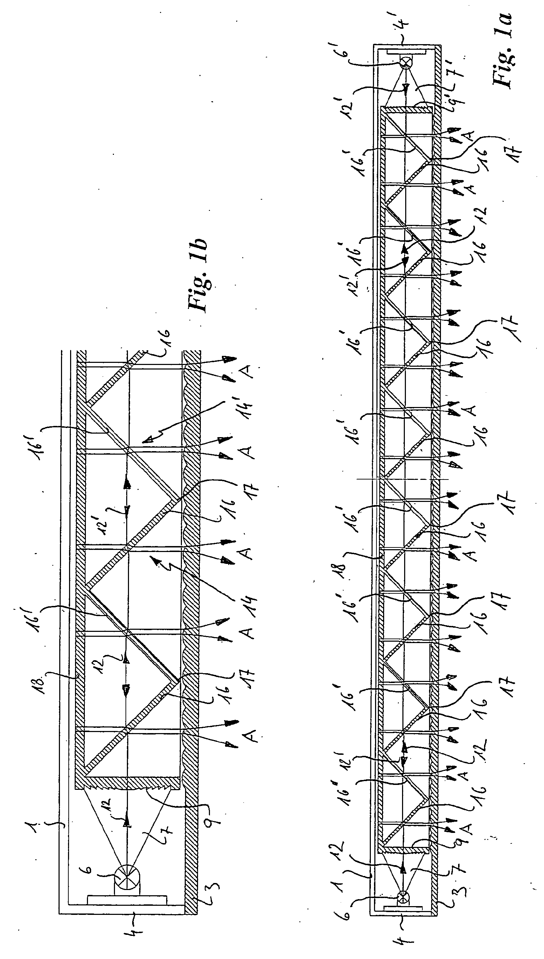

In den Fig. 1a und 1b ist ein in Einbaulage horizontal verlaufender Längsschnitt durch das langgestreckte Gehäuse 1 einer erfindungsgemäßen hochgesetzten Bremsleuchte dargestellt, das im wesentlichen kastenförmig ausgebildet und an seiner in den Figuren unten liegenden Vorderseite durch eine Lichtdurchtrittsscheibe 3 verschlossen ist.

Im Inneren des Gehäuses ist an jeder der beiden schmalen Stirnseiten 4, 4' eine Lichtquelle 6, 6' angeordnet, deren zunächst divergentes Lichtbündel 7, 7' durch eine Fresnel-Linse 9, 9' hindurch tritt und sich danach als in etwa paralleles Lichtbündel zu der jeweils gegenüberliegenden Stirnseite 4' bzw. 4 hin ausbreitet. Dabei verlaufen die in etwa zusammenfallenden Zentralachsen 12, 12' ungefähr parallel zur Lichtdurchtrittsscheibe 3 mit einem Abstand hinter dieser, der in etwa der Hälfte der Gehäusetiefe entspricht.

Jedem der beiden parallelen Lichtbündel ist eine Lichtverteilungsvorrichtung 14, 14' zugeordnet, die eine Vielzahl von Auskoppelschichten 16, 16' umfaßt, die hier als in etwa planparallele Platten aus einem transparenten Material ausgebildet sind, dessen Brechungsindex sich vom Brechungsindex der Luft unterscheidet, welche die zwischen diesen Auskoppelschichten16, 16' vorhandenen Zwischenräume erfüllt.

Die der Lichtquelle 6 zugeordneten Auskoppelschichten 16 sind gegen die Zentralachse 12 dieses Lichtbündels unter einem Winkel von etwa 45° so geneigt, daß ein Teil des von der Lichtquelle 6 kommenden Lichtes, das zunächst auf ihre vordere und dann ihre hintere Grenzfläche auftrifft, zu einer Lichtaustrittsfläche hin reflektiert wird, die durch die in den Figuren unten liegenden Scheitel 17 der von den Auskoppelschichten 16, 16' gebildten Zick-Zack-Struktur definiert wird. Im vorliegenden Fall ist diese Lichtaustrittsfläche keine körperliche Oberfläche sondern bildet im mathematischen Sinn die Einhüllende der Scheitel 17 der Zick-Zack-Struktur und fällt in etwa mit der Rückseite der Lichtdurchtrittsscheibe 3 zusammen.

Das von den Auskoppelschichten 16 zur Lichtaustrittsfläche hin reflektierte Licht trifft von hinten her auf die Lichtdurchtrittsscheibe 3 und gelangt durch diese hindurch nach außen, wie dies durch die Pfeile A angedeutet ist. Der auf diese Weise ausgekoppelte Teil des Lichtbündels 6 ist jeweils kleiner als der Anteil, der sich nach Durchtritt durch die betreffende Auskoppelschicht 16 mit einem gewissen Parallelversatz nach hinten (d.h. von der Lichtdurchtrittsscheibe 3 weg) weiterhin zur gegenüberliegenden Stirnseite 4' ausbreitet.

Entsprechendes gilt auch für die der Lichtquelle 6' zugeordnete Lichtverteilungsvorrichtung 14' mit ihren planparallelen Platten 16'.

Da die beiden Lichtverteilungsvorrichtungen 14 und 14' so ineinander verschachtelt angeordnet sind, daß sich die im Schnitt der Fig.1a und 1b deutlich erkennbare Zick-Zack-Struktur ergibt, folgt für jedes der parallelen Lichtbündel nach einem Durchtritt durch eine Auskoppelschicht 16 bzw. 16' der zugehörigen Lichtverteilungsvorrichtung 14 bzw. 14' ein Durchtritt durch eine Auskoppelschicht 16' bzw. 16 der dem anderen Lichtbündel zugrordneten, "fremden" Lichtverteilungsvorrichtung.

Die Auskoppelschichten 16' bzw. 16 der jeweils fremden Lichtverteilungsvorrichtung 14' bzw. 14 besitzen eine solche Neigung gegen die Zentralachsen 12 bzw. 12' der Lichtbündel, dass der durch eine dieser fremden Auskoppelschichten ausgekoppelte Anteil des betreffenden Lichtbündels nicht nach vorne zur Lichtdurchtrittsscheibe 3 hin sondern nach hinten reflektiert wird. Um diese Lichtanteile nicht zu verlieren, sind die Auskoppelschichten 16 bzw. 16' der Lichtverteilungsvorrichtungen 14 bzw. 14' durch eine gemeinsame Rückwand 18 verbunden, die so verspiegelt oder mit totalreflektierenden Tripelprismenanordnungen versehen ist, daß sie die nach hinten ausgekoppelten Lichtanteile so reflektiert, daß sie nach Durchtritt durch die jeweilige planparallele Platte 16 bzw. 16' nach vorne zur Lichtaustrittsfläche der Lichtverteilungsvorrichtung 14 bzw. 14' und damit zur Lichtdurchtrittsscheibe 3 gelangen und durch diese hindurch austreten.

Da aus jedem der Lichtbündel beim Durchtritt durch eine der Auskoppelschichten 16, 16' ein Anteil ausgekoppelt wird, nimmt die Intensität des sich weiterhin in Längsrichtung ausbreitenden Lichtstroms nach jedem Durchtritt ab. Gleiches gilt auch für die ausgekoppelten Anteile, da deren Intensität beispielsweise immer etwa 10 % der Intensität des auf die jeweilige Auskoppelschicht 16 bzw. 16' auffallenden Lichtes beträgt. Würde man also nur die in den Figuren links dargestellte Lichtquelle 4 mit ihrer zugehörigen Lichtverteilungsvorrichtung 14 vorsehen, so würde die Intensität des durch die Lichtdurchtrittsscheibe 3 hindurch abgestrahlten Lichts von (in den Figuren gesehen) links nach rechts stark abnehmen. Zur Kompensation dieser nicht akzeptablen Ungleichverteilung der Helligkeit dient die auf der rechten Seite angeordnete Lichtquelle 6' mit ihrer zugehörigen Lichtverteilungsvorrichtung 14', bei der der Helligkeitsabfall gerade entgegengesetzt verläuft. Auf diese Weise läßt sich die gesamte Lichtdurchtrittsscheibe 3 von hinten her zumindest in einem solchen Ausmaß gleichförmig durchleuchten, daß die Helligkeitsunterschiede dem menschlichen Auge nicht mehr auffallen bzw. die gesetzlichen Anforderungen erfüllt werden.

Ein weiterer vorteilhafter Effekt der Verwendung von zwei ineinander verschachtelt, d.h. mit alternierend geneigten Auskoppelschichten 16, 16' angeordneten Lichtverteilungsvorrichtungen 14, 14' besteht darin, daß immer die eine den durch die andere bewirkten, nach hinten erfolgenden Parallelversatz der Lichtbündel wieder aufhebt, so daß sich der Abstand der Zentralachsen 12, 12' von der Lichtdurchtrittsscheibe 3 nicht zunehmend ändert.

Wie man den Fig. 1 a und 1b entnimmt, besitzt die Lichtdurchtrittsscheibe 3 auf ihrer Innenseite eine optisch wirksame Struktur, die zu einer weiteren Vergleichmäßigung der Intensität des austretenden Lichts bzw. dazu verwendet werden kann, das austretende Licht in spezielle gewünschte Raumwinkelbereiche zu bündeln.

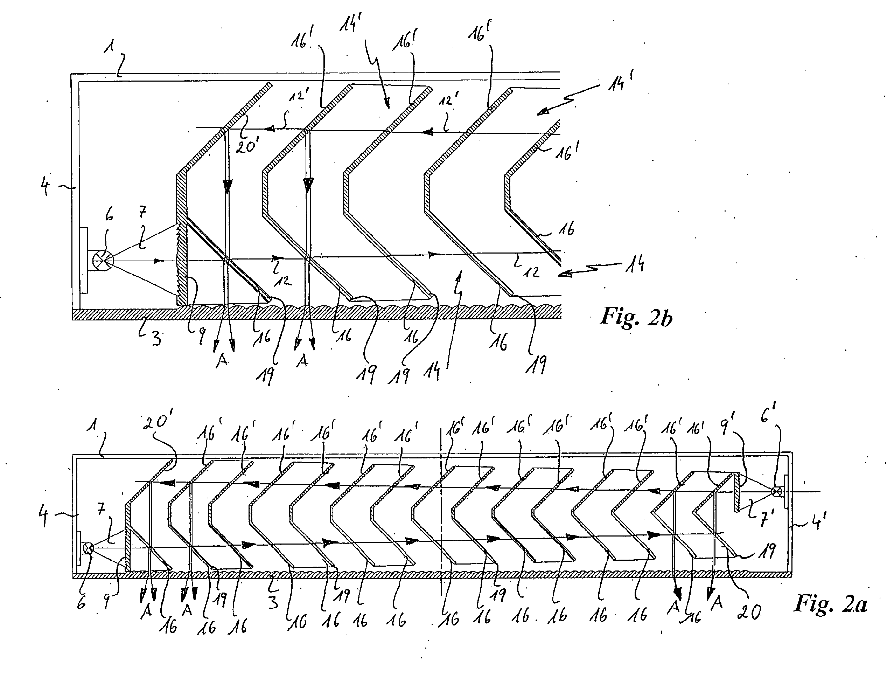

Bei dem in den Fig. 2a und 2b dargestellten Ausführungsbeispiel, bei dem gleiche Teile die gleichen Bezugszeichen wie in den Fig. 1 a und 1b tragen, sind die beiden Lichtquellen 6, 6' und ihre zugehörigen Lichtverteilungsvorrichtungen 14, 14' so angeordnet, daß sie von der Lichtaustrittsfläche bzw. der Lichtscheibe 3 her gesehen hintereinander liegen. Auf diese Weise wird erreicht, daß jedes der in etwa parallelen Lichtbündel nur durch die Auskoppelschichten 16 bzw. 16' der zugehörigen Lichtverteilungsvorrichtung 14 bzw. 14' hindurch tritt. Dadurch wird eine Auskoppelung von Lichtanteilen nach hinten vermieden und die verspiegelte Rückwand 18 des in den Fig. 1a und 1b gezeigten Ausführungsbeispiels kann entfallen. Dafür muß aber eine größere Bautiefe in Kauf genommen werden. Die immaterielle Lichtaustrittsfläche der Lichtverteilungsvorrichtungen wird hier durch die in den Figuren unten liegenden Vorderkanten 19 der Auskoppelschichten 16 definiert bzw. aufgespannt.

Außerdem wird der Parallelversatz der jeweiligen Lichtbündel-Zentralachsen 12, 12' nicht mehr durch den Durchtritt durch die in Gegenrichtung geneigten Auskoppelschichten 16' bzw. 16 der jeweils fremden Lichtverteilungsvorrichtung 14, 14' kompensiert sondern addiert sich von Durchtritt zu Durchtritt, so daß mit zunehmendem Abstand von der jeweiligen Lichtquelle 6 bzw. 6' die die jeweiligen Zentralachsenabschnitte verbindende Linie einen immer größeren Abstand zur Lichtdurchtrittsscheibe 3 gewinnt. Um dennoch den gesamten Lichtbündel-Querschnitt voll nutzen zu können, müssen daher die Auskoppelschichten 16 bzw. 16' auf der in den Fig. 2a und 2b linken Seite in der zur Lichtdurchtrittsscheibe 3 senkrechten Richtung größere Abmessungen besitzen als die Auskoppelschichten 16 bzw. 16' auf der in diesen Figuren rechten Seite.

Bei dieser Ausführungsform ist vorteilhafterweise die letzte, gegen die Zentralachse 12 bzw. 12' geneigte Fläche 20 bzw. 20', auf die das betreffende Lichtbündek trifft, voll verspiegelt, damit an ihr die gesamte verbliebene Intensität zu Lichtdurchtrittsscheibe 3 hin ausgekoppelt wird.

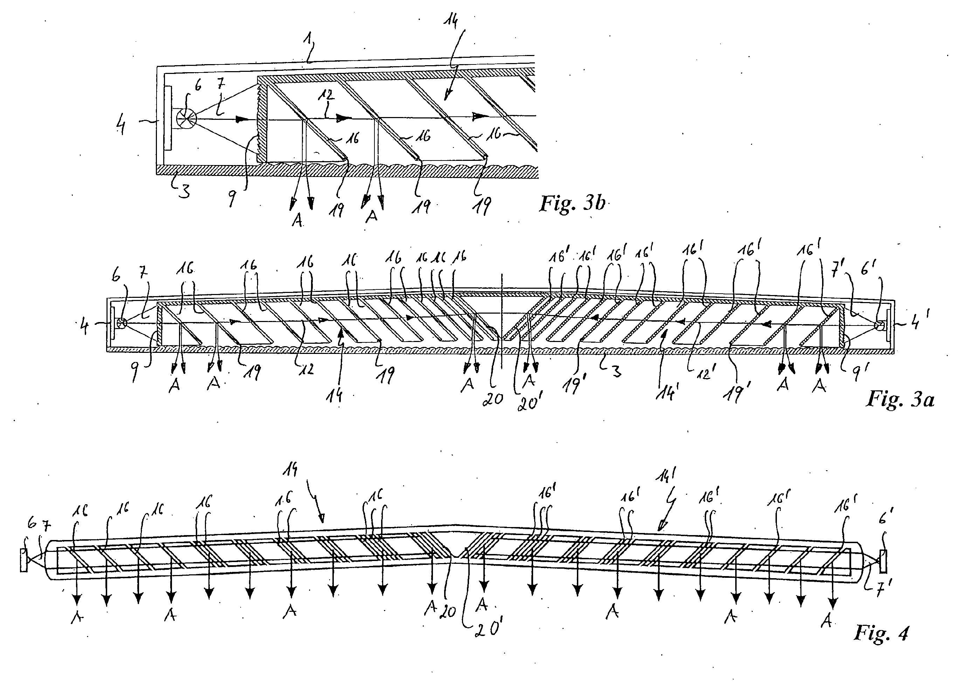

Bei dem in den Fig. 3a und 3b dargestellten Ausführungsbeispiel sind die beiden Lichtverteilungsvorrichtungen 14 bzw. 14' so angeordnet, daß sie von der Lichtaustrittsfläche bzw. der Lichtdurchtrittsscheibe 3 her gesehen nebeneinander liegen. Jedes der beiden in etwa parallelen Lichtbündel breitet sich somit nur von der zugehörigen Stirnseite 4 bzw. 4' bis etwa zur Mitte der Gesamtanordnung aus und dient somit nur zur Durchleuchtung der linken bzw. rechten Hälfte der Lichtdurchtrittsscheibe 3. Da es bei dieser Anordnung nicht möglich ist, daß das eine der beiden Lichtbündel die mit zunehmendem Abstand von der Lichtquelle fortschreitende Intensitätsabschwächung des jeweils anderen Lichtbündels kompensiert, nehmen bei diesem Ausführungsbeispiel die Abstände zwischen den einzelnen Auskoppelschichten 16 bzw. 16' mit zunehmender Entfernung von der Lichtquelle 6 bzw. 6' immer stärker ab.

Dadurch wird erreicht, daß in unmittelbarer Nähe der Lichtquelle pro Längeneinheit in Längsrichtung weniger aber dafür hellere Anteile und in der Nähe der Mitte mehr Anteile mit geringerer Intensität ausgekoppelt werden, so daß sich insgesamt wieder eine weitgehend gleichförmige Durchleuchtung der Lichtdurchtrittsscheibe 3 ergibt.

Auch hier sind die jeweils letzten geneigten Flächen 20, 20' vorteilhafterweise voll verspiegelt. Um trotz des nach hinten erfolgenden Parallelversatzes der Zentralachsen 12, 12' den gesamten Lichtbündelquerschnitt nutzen zu können, sind sowohl die Längsachsen als auch die durch die Vorderkanten 19, 19' der Auskoppelschichten 16, 16' definierten Lichtaustrittsflächen der beiden Lichtverteilungsvorrichtung 14 bzw. 14' gegen die Längsachse der Lichtdurchtrittsscheibe 3 unter einem kleinen, spitzen Winkel gegensinnig geneigt, wodurch die in Fig.3a deutlich erkennbare "abgeknickte" Konfiguration entsteht.

Statt der in Fig.3a gezeigten kontinuierlichen Abnahme der Abstände zwischen den Auskoppelschichten ist es auch möglich, diese zumindest teilweise zu Gruppen zusammenzufassen, wobei die mittleren Abstände der Gruppen und auch die Abstände der Auskoppelschichten innerhalb einer Gruppe gleich bleiben, sich aber die Zahl der pro Gruppe vorgesehenen Auskoppelschichten mit zunehmendem Abstand von der Lichtquelle erhöht.

Dies ist in stark schematisierter Weise bei dem in Fig.4 wiedergegebenen Ausführungsbeispiel dargestellt, bei dem die Auskoppelschichten nicht von planparallelen Platten sondern von in etwa planparallelen, mit Luft gefüllte Zwischenräumen zwischen transparenten Festkörperelementen gebildet werden. Am Ende einer jeden Lichtverteilungsvorrichtung befindet sich wieder eine voll verspiegelte Fläche 20 bzw. 20'. Auch hier ist die oben erwähnte abgeknickte Anordnung der beiden Lichtverteilungsvorrichtungen 14, 14 verwirklicht.

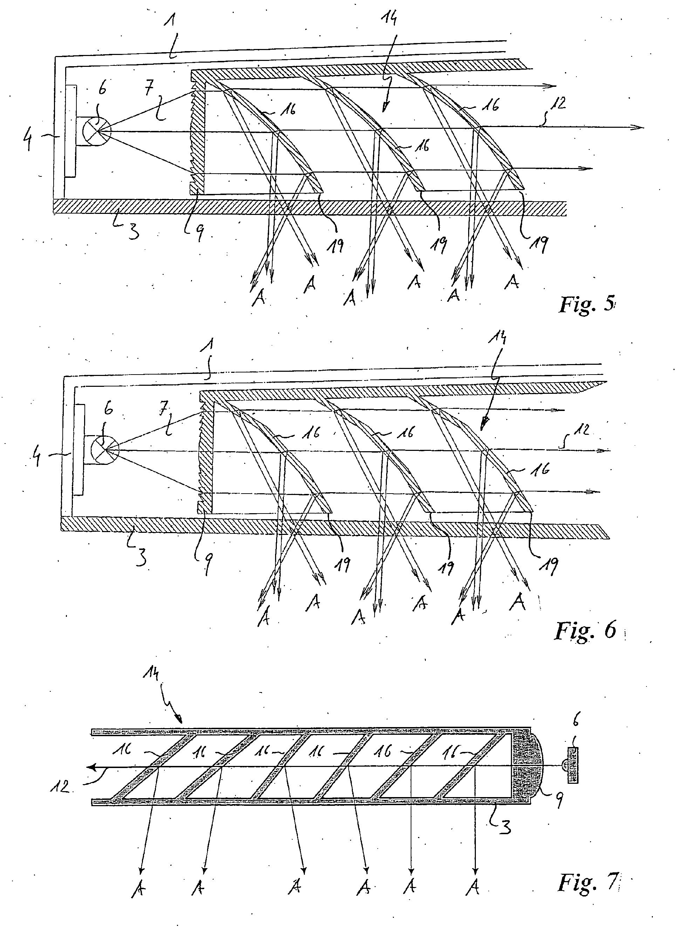

In den Fig. 5 und 6 ist jeweils ein Horizontalschnitt durch den linken Teil einer erfindungsgemäßen Leuchte dargestellt, die sich von den vorausgehenden Ausführungsbeispielen im wesentlichen dadurch unterscheidet, daß die Auskoppelschichten 16 nicht von planparallelen sondern von in der Schnittebene gekrümmten Platten gebildet werden, wobei der Krümmungsverlauf in Fig.5 stetig ist, während er in Fig.6 einem Poligonzug folgt. Wesentlich bei beiden Anordnungen ist, daß unterschiedliche Querschnittsbereiche des parallelisierten Lichtbündels nicht mehr zu einander parallel sondern in verschiedenen Richtungen ausgekoppelt werden können, wie dies durch die Pfeile A angedeutet ist. Somit ist es möglich, eine Lichtdurchtrittsscheibe 3 ohne optisch wirksame Struktur zu verwenden und dennoch eine von einer rein parallelen Durchstrahlung abweichende Lichtverteilung zu erzielen. Durch Variation der Krümmungen der Auskoppelschichten 16 sowohl in der im Schnitt der Fig. 5 und 6 gezeigten als auch der hier zu senkrechten Ebene lassen sich somit innerhalb weiter Grenzen nahezu beliebige Lichtverteilungen erzielen. Es liegt auch im Rahmen der vorliegenden Erfindung, innerhalb einer Lichtverteilungsvorrichtung planparallele und gekrümmte Auskoppelschichten miteinander zu kombinieren.

Die immaterielle Lichtdurchtrittsfläche wird bei den beiden in den den Fig. 5 und 6 gezeigten Beispielen ebenfalls durch die in diesen Figuren unten liegenden Vorderkanten 19 der Auskoppelschichten 16 aufgespannt.

In Fig.7 ist in stark schematisierter Weise ein Horizontalschnitt durch den rechten Teil einer erfindungsgemäßen Lichtverteilungsvorrichtung 14 mit zugehöriger Lichtquelle 6 wiedergegeben, bei der die Auskoppelschichten 16 wieder von planparallelen Platten gebildet werden, die aber gegen die zentrale Achse 12 des parallelisierten Lichtbündels teils gleiche teils unterschiedliche Neigungswinkel aufweisen, so daß die von ihnen ausgekoppelten Lichtanteile teils zu einander parallel teils in unterschiedlichen Richtungen verlaufen, wie dies durch die Pfeile A angedeutet ist. Im Unterschied zu den unter Bezugnahme auf die Fig. 5 und 6 beschriebenen Ausführungsbeispielen sind es hier nicht unterschiedliche Querschnittsbereiche des parallelisierten Lichtbündels sondern in Längsrichtung aufeinander folgende Teile, die zur Erzielung einer gewünschten Lichtverteilung in unterschiedliche Richtungen ausgekoppelt werden. Hier ist die Lichtdurchtrittsfläche eine Körperfläche und fällt mit der Rückseite der Lichtdurchtrittsscheibe 3 zusammen.

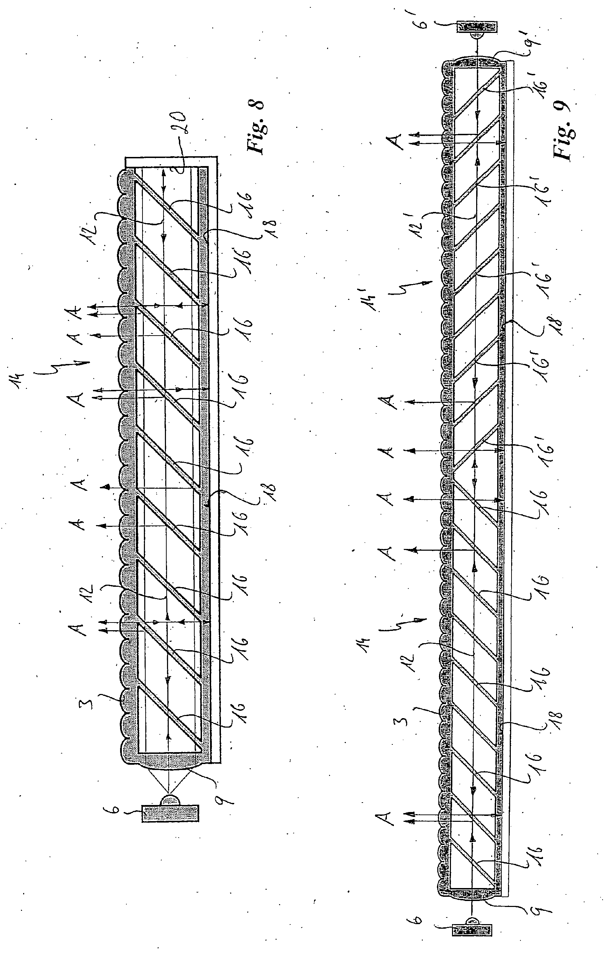

Gleiches gilt auch für Fig.8, in der ein Horizontalschnitt durch eine erfindungsgemäße Lichtverteilungsvorrichtung 14 wiedergegeben ist, die mit der Lichtdurchtrittsscheibe 3 einstückig ausgebildet ist, wobei letztere eine Kissenoptik trägt, die hier zur Erzielung einer bestimmten Lichtverteilung vorgesehen ist. Auf der in Fig.8 rechten Seite befindet sich hinter der letzten Auskoppelschicht 16 eine Spiegelfläche 20, die so angeordnet ist, daß sie den nach Durchlaufen der Auskoppelschichten 16 verbleibenden Rest des von der links befindlichen Lichtquelle 6 kommenden und durch die Fresnel-Linse 9 parallelisierten Lichtbündels in sich zurückwirft, so daß er die Auskoppelflächen 16 in entgegengesetzter Richtung durchläuft, wobei seine Zentralachse im wesentlichen mit der Zentralachse 12 des von der Lichtquelle 6 kommenden Lichtbündels zusammenfällt. Aus dem nach der Reflexion an der Spiegelfläche 20 zurücklaufenden Lichtbündel wird an jeder Auskoppelschicht 16 wieder ein Teil ausgekoppelt, der jedoch wegen der "falschen" Neigung der Auskoppelflächen 16 nicht zur Lichtdurchtrittsscheibe 3 hin sondern nach hinten geworfen wird. Um diese Lichtanteile nicht zu verlieren, ist an der Rückseite, d. h. der der Lichtdurchtrittsscheibe 3 gegenüberliegenden Seite der Lichtverteilungsvorrichtung 14 eine Spiegelfläche 18 vorgesehen, die das auf sie auftreffende Licht zur Lichtdurchtrittsscheibe 3 hin reflektiert.

Die Intensität des an der Spiegelfläche 20 reflektierten Lichtbündels ist beim Hindurchtreten durch die ganz rechts liegende Auskoppelfläche 16 am stärksten und nimmt umso mehr ab, je weiter sich das Lichtbündel nach links ausbreitet. Umgekehrt ist die Intensität des von der Lichtquelle 6 kommenden Lichtbündels nach Durchlaufen der ganz rechts liegenden Auskoppelfläche am geringsten. Da sich die Intensitäten der in jedem Längsabschnitt der Lichtverteilungsvorrichtung 14 ausgekoppelten Anteile des vor- und des zurücklaufenden Lichtbündels addieren, erfolgt somit eine gewisse Kompensation der durch das wiederholte Durchlaufen von Auskoppelschichten auftretenden Intensitätsabnahme, die insbesondere bei Fahrzeugleuchten, deren Längserstreckung in Ausbreitungsrichtung des Lichtbündels nicht besonders groß ist, ohne weiteres ausreicht, um eine zumindest für die Wahrnehmung des menschlichen Auges gleichförmige Helligkeitsverteilung über die gesamte Länge hinweg zu erzielen.

In Fig.9 ist ein Horizontalschnitt durch zwei einstückig miteinander verbundene, nebeneinander angeordnete Lichtverteilungsvorrichtungen 14, 14' wiedergegeben, von denen jeder eine Lichtquelle 6 bzw. 6' zugeordnet ist, deren Lichtbündel sich nach Parallelisierung durch die Fresnel-Linsen 9 bzw. 9' längs ihrer miteinander fluchtenden Zentralachsen 12 bzw. 12' in einander entgegengesetzten Richtungen ausbreiten. Hier ist am Ende einer jeden Lichtverteilungsvorrichtung 14 bzw. 14' keine verspiegelte Fläche vorgesehen, so daß sich der nach Durchlaufen der zugehörigen Lichtverteilungsvorrichtung 14 bzw. 14' verbleibende Rest eines jeden der beiden Lichtbündel ungehindert durch die gegenüberliegende Lichtverteilungsvorrichtung 14' bzw. 14 weiter ausbreiten kann, wobei allerdings an jeder Auskoppelfläche 16' bzw. 16 ein Anteil nach hinten, d. h. von der Lichtdurchtrittsscheibe 3 weg ausgekoppelt wird. Um diese Anteile nicht zu verlieren, ist auf der Rückseite der Lichtverteilungsvorrichtung 14, 14' eine durchgehende Spiegelfläche 18 vorgesehen, die das auf sie auftreffende Licht zur Lichtdurchtrittsscheibe 3 hin reflektiert, deren Rückseite die Lichtdurchtrittsfläche bildet.

Auch bei dieser Anordnung ist die Intensität des aus jedem der beiden Lichtbündel ausgekoppelten Anteils dort am schwächsten, wo die des aus dem jeweils anderen Lichtbündel ausgekoppelten Anteils am stärksten ist, so daß sich wieder eine gewisse Kompensation der über die Länge hinweg auftretenden Helligkeitsverluste ergibt.

Es sei nochmals darauf hingewiesen, daß bei allen bisher erläuterten Ausführungsformen senkrecht zur Zeichenebene mehrere Lichtquellen übereinander angeordnet sein können. Bei diesen eine größere Höhe besitzenden Fahrzeugleuchten können dann die an der Lichtdurchtrittsscheibe 3 oder an einem gesonderten Bauteil vorgesehenen beziehungsweise einstückig mit der Lichtverteilungsvorrichtung 14 ausgebildeten, zur Erzielung einer besonderen Lichtverteilung dienenden optischen Strukturen beispielsweise von sich über die gesamte Länge und/oder die gesamte Breite der Anordnung erstreckenden Zylinderlinsen oder Kissen-Optiken gebildet werden.

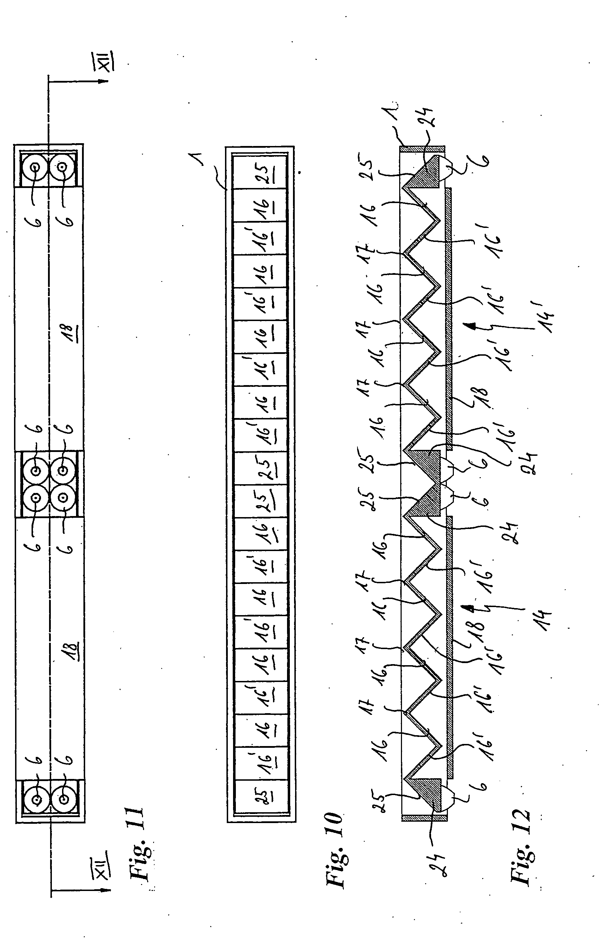

In den Fig. 10 bis 12 ist in schematischer Weise der Aufbau einer langgestreckten Leuchte dargestellt, bei der als Lichtquellen 8 Leuchtdioden 6 Verwendung finden, um die zur Durchleuchtung der Lichtdurchtrittsfläche erforderlichen Lichtströme in zwei nebeneinander angeordnete Lichtlenkvorrichtungen 14, 14' einzuspeisen. Wie man der Rückansicht der Fig. 11 entnimmt, sind dabei immer zwei Leuchtdioden 6 quer zur Längserstreckung der Leuchte "übereinander" angeordnet, um der ausgeleuchteten Fläche eine größere Höhe zu verleihen.

Die beiden Lichtleitvorrichtungen 14 und 14', von denen jede in der oben beschriebenen Weise zickzack-förmig ausgebildet ist, sind zwar nebeneinander angeordnet, lichttechnisch aber voneinander getrennt.

Wie die Fig. 11 und 12 zeigen, sind in der Mitte der Leuchte vier Leuchtdioden so positionert, daß das Licht des einen Paares in die links liegende Lichtleitvorrichtung 14 und die des anderen Paares in die rechts liegende Lichtleitvorrichtung 14' eingespeist wird. Zu diesem Zweck sind die Leuchtdioden von hinten her in prismenartige Lichtleitkörper 24 so eingeschoben, daß ihr Licht von hinten her auf eine schräggestellte Umlenkfläche 25 fällt, wobei der Winkel dieser Fläche 25 bezüglich der Hauptstrahlrichtung des auftreffenden Lichts bzw. die Brechungsindizes des Materials des Lichtleitkörpers 24 und der umgebenden Luft so gewählt sind, daß die jeweilige Umlenkfläche 25 den kleineren Teil des auf sie auftreffenden Lichtes geradlinig hindurchtreten läßt und den Hauptanteil in etwa in einem rechten Winkel so umlenkt, daß er sich als Lichtstrom durch die benachbarte Lichtlenkvorrichtung 14 bzw. 14' ausbreitet. Dadurch wird erreicht, daß in der Vorderansicht der Figur 10 auch diejenigen Bereiche der Lichtdurchtrittsfläche, hinter denen die Lichtleitkörper 24 angeordnet sind, im Betrieb beleuchtet sind und nicht als dunkle Flächen erscheinen. An den äußeren Enden der beiden Lichtleitvorrichtungen 14, 14' sind entsprechende Lichtleitkörper 24 vorgesehen, die das Licht der hinter ihnen angeordneten Leuchtdioden 6 als sich zur Mitte hin ausbreitenden Lichtstrom einspeisen. Die Umlenkflächen 25 dieser Lichtleitkörper sind in der gleichen Weise ausgebildet, wie dies oben beschrieben wurde, so daß auch die außen liegenden Bereiche der Lichtdurchtrittsfläche beleuchtet sind. Da, wie bereits erwähnt, die zickzack-förmige Anordnung der Auskoppelschichten 16, 16' dazu führt, daß ein Teil des hindurchtretenden Lichts nach hinten, d.h. zur Gehäuserückwand 18 hin ausgekoppelt wird, ist diese Rückwand 18 verspiegelt, um die auf sie auftreffenden Lichtanteile zur Ausleuchtung der Lichtdurchtrittsfläche nützen zu können, die hier wieder von den Scheiteln 17 der Zickzack-Anordnung definiert wird.

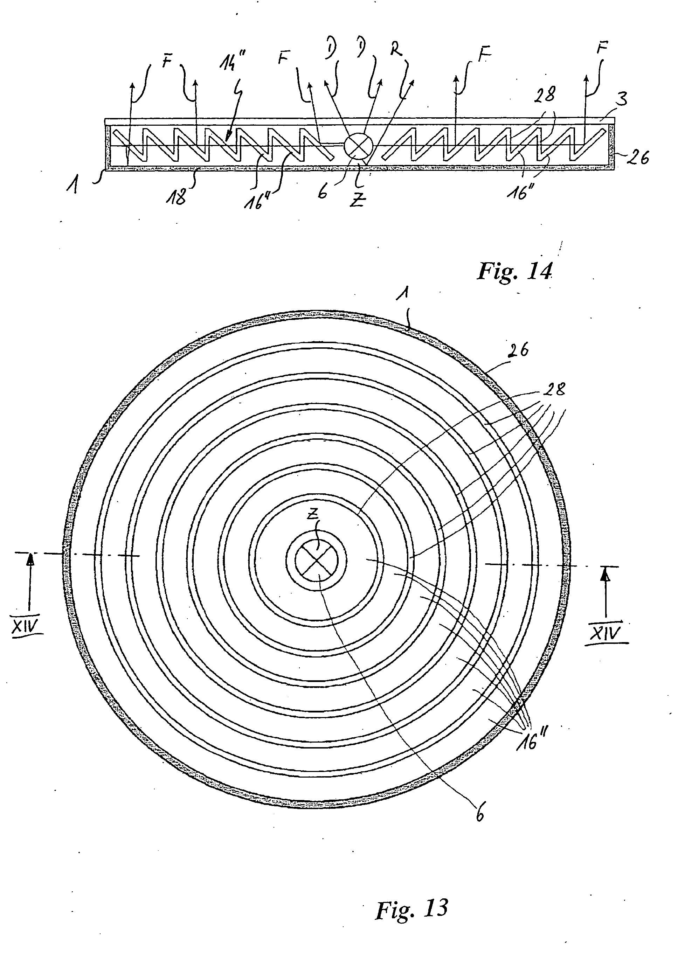

In den Fig. 13 und 14 ist eine erste Ausführungsform einer nich linearen Leuchte dargestellt, die ein Gehäuse 1 mit einer in Draufsicht kreisförmigen Lichtdurchtrittsfläche und einer ebenen, ebenfalls kreisförmigen Lichtdurchtrittsscheibe 3 umfaßt.

Im Zentrum Z des Gehäuses 1 ist eine als Glühlampe dargestellte Lichtquelle 6 unmittelbar hinter der Lichtdurchtrittsscheibe 3 angeordnet, die ihr Licht in allen Richtungen, d.h. nach vorne direkt durch die Lichtdurchtrittsscheibe 3 hindurch (Pfeile D), parallel zu dieser, d.h. in Fig.14 in horizontaler Richtung, und auch nach hinten zur Rückwand 18 des Gehäuses 1 hin abstrahlt.

Um das parallel zur Lichtdurchtrittsscheibe 3 abgestrahlte Licht für einen Betrachter sichtbar zu machen, ist eine Lichtverteilungsvorrichtung 14" vorgesehen, die eine Vielzahl von Auskoppelschichten 16" umfaßt, von denen jede von einer planparallen Platte in Form eines Hohlkegelstumpfmantels gebildet wird, dessen zentrale Symmetrieachse in etwa senkrecht zur Ebene der Lichtdurchtrittsscheibe 3 durch das Zentrum Z der Leuchte hindurch verläuft. In dem dargestellten Ausführungsbeispiel sind sieben derartiger Auskoppelschichten 16" vorhanden, deren zentrale Symmetrieachsen zusammenfallen, so daß sie sich in konzentrischen Ringen in gleichmäßig zunehmenden Abständen in Umfangsrichtung um das Zentrum Z herum erstrecken.

Da die Auskoppelschichten 16" einen anderen Brechungsindex aufweisen als das sie umgebende Medium, reflektieren sie einen Teil des auf sie auftreffenden, von der Lichtquelle 6 kommenden Lichtstroms quer zu dessen zur Lichtdurchtrittsscheibe 3 parallelen Ausbreitungsebene so, daß es von hinten auf die Lichtdurchtrittsscheibe 3 auftrifft und durch diese hindurch zum Betrachter hin austritt, wie dies durch die Pfeile F angedeutet ist. Dabei kann die genaue Austrittsrichtung der ausgekoppelten Lichtanteile durch eine Variation des Neigungswinkels der einzelnen Auskoppelschichten 16" bezüglich der Ausbreitungsrichtung des von der Lichtquelle 6 kommenden Lichts innerhalb weiter Grenzen variiert werden, so daß sich unterschiedlichste Lichtverteilungen erzielen lassen.

Der Hauptteil des auf jede der Auskoppelschichten 16" auftreffenden Lichts tritt jedoch geradlinig, allenfalls mit einer geringen Parallelversetzung durch sie hindurch um dann auf die nächste, radial weiter außen liegende Auskoppelschicht 16" aufzutreffen, die wieder einen Teil zur Lichtdurchtrittsscheibe 3 hin auskoppelt. Dabei erfolgt vom Zentrum Z zu den Rändern hin eine zunehmende Abnahme der Intensität sowohl des sich weiter ausbreitenden Lichts als auch der jeweils ausgekoppelten Anteile.

Diese Intensitätsabnahme wird zumindest teilweise dadurch kompensiert, daß die Innenflächen sowohl der zylindrischen Gehäuse-Umfangswand 26 als auch der Rückwand 18 verspiegelt sind. Dadurch wird das durch die radial äußerste planparallele Auskoppelschicht 16" hindurch tretende Licht von der Innenseite der Gehäuse-Umfangswand 26 reflektiert, so daß es sich wiederum in etwa parallel zur Lichtdurchtrittsscheibe 3 aber in Gegenrichtung, d.h. zum Zentrum Z hin ausbreitet und dabei erneut auf die radial äußerste Auskoppelschicht 16" trifft. Dabei wird wieder ein Teil des Lichtes ausgekoppelt, wegen der entgegengesetzten Neigung der Auskoppelschicht 16" aber nicht zur Lichtdurchtrittsscheibe 3 sondern zur Rückwand 18 hin, die das auf sie auftreffende Licht aufgrund der oben erwähnten Verspiegelung reflektiert, so daß dessen Hauptanteil von hinten her durch die äußerste Auskoppelschicht 16" hindurch tritt und durch die Lichtdurchtrittsscheibe 3 in Richtung des Pfeiles F nach außen gelangt. Ein entsprechender Vorgang wiederholt sich bei jeder weiteren planparallelen Schicht zum Zentrum Z hin.

Die Intensität des von der verspiegelten Innenseite der Gehäuse-Umfangswand 26 zum Zentrum Z hin zurücklaufenden Lichtstroms nimmt bei jedem Durchtritt durch eine der Auskoppelschichten 16" aufgrund der beschriebenen Auskopplungsvorgänge weiter ab. Während also die Intensität des vom Zentrum Z nach außen laufenden Lichtstroms in unmittelbarer Umgebung des Zentrums Z am größten und im Bereich der Gehäuse-Umfangswand 26 am kleinsten ist, verhält es sich mit der Intensität des zurücklaufenden Lichtstroms gerade umgekehrt. Dadurch erfolgt eine teilweise Kompensation der zuerst genannten Intensitätsabnahme.

Eine weitere Kompensation kann beispielsweise dadurch erfolgen, daß analog zu der oben unter Bezugnahme auf die Fig. 3a und 3b beschriebenen Leuchte die planparallelen Auskoppelschichten 16" mit zunehmendem Abstand vom Zentrum Z in immer kleineren gegenseitigen radialen Abständen angeordnet werden, so daß die abnehmende Intensität der einzelnen ausgekoppelten Lichtanteile durch deren zunehmende Häufigkeit zumindest teilweise ausgeglichen wird. Auch eine gruppenweise Anordnung der Auskoppelschichten 16", bei der die mittleren radialen Abstände der einzelnen Gruppen zwar gleich bleiben, die Anzahl der pro Gruppe vorgesehenen planparallelen Auskoppelschichten aber zunimmt, kann zur Erzielung einer möglichst gleichmäßigen Ausleuchtung der Lichtscheibe vorgesehen werden, wie dies in ähnlicher Form bei der oben unter Bezugnahme auf Fig. 4 beschrieben linearen Leuchte der Fall ist.

Durch die Verspiegelung der Innenseite des Rückwand 18 kann auch das Licht, das von der Lichtquelle 6 direkt zur Rückwand hin abgestrahlt wird, so umgelenkt werden, daß es nach außen tritt, wie dies der Pfeil R andeutet.

Um die Auskoppelschichten 16", die im vorliegenden Fall aus einem transparenten Kunststoff hergestellt sind, zu einer einstückigen Lichtverteilungsvorrichtung 14" zu verbinden, ist eine Vielzahl von Verbindungsstegen 28 vorgesehen, die zur Ebene der Lichtdurchtrittsscheibe 3 in etwa senkrecht angeordnet sind, so daß das sich vom Zentrum Z nach außen bzw. von der verspiegelten Innenseite der Gehäuse-Umfangswand 26 nach innen ausbreitende Licht in etwa geradlinig und ohne merklichen Auskopplungseffekt durch sie hindurch tritt. Wie gezeigt, verbinden dabei diese Verbindungsstege 28 die obere Umfangskante einer jeden radial weiter innen liegenden Auskoppelschicht 16", mit der unteren Umfangskante der nächst äußeren Auskoppelschicht 16",.

Bei dem in Fig. 13 und 14 dargestellten Ausführungsbeispiel erstrecken sich die Verbindungsstege 28 über den gesamten Umfang, wodurch sich eine sehr stabile Lichtverteilungsvorrichtung 14" ergibt.

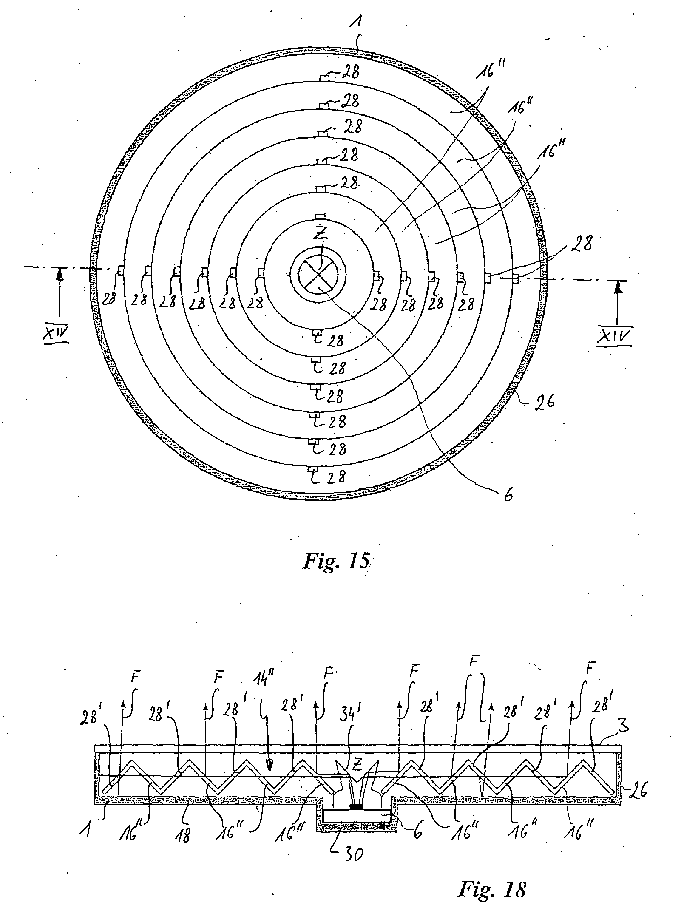

Da in den transparenten Verbindungsstegen 28 gewisse Lichtverluste auftreten, ist gemäß der in Fig.15 dargestellten bevorzugten Ausführungsform vorgesehen, daß die Verbindungsstege 28 in Umfangsrichtung nur eine sehr geringe Ausdehnung besitzen dabei aber in vier in gleichen Winkelabständen über den Umfang verteilten Gruppen angeordnet sind. Ansonsten ist die Leuchte nach Fig.15 mit der oben unter Bezugnahme auf die Fig. 13 und 14 beschriebenen Leuchte identisch.

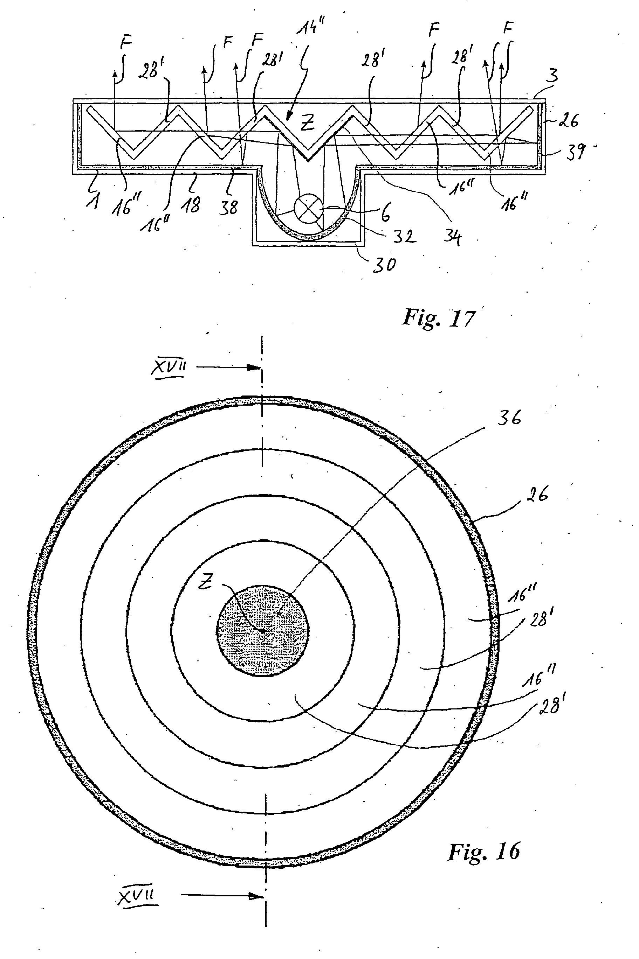

Bei dem in den Fig. 16 und 17 dargestellten Ausführungsbeispiel ist die wiederum als Glühlampe dargestellte Lichtquelle 6 in einer Vertiefung 30 der Rückwand 18 in einem Hohlspiegel 32 angeordnet, der ihr Licht nach oben auf eine Reflektoranordnung 34 wirft, die als Verspiegelung einer der Lichtquelle 6 zugewandten Kegel-Mantelfläche ausgebildet ist. Der Öffnungswinkel dieser Kegel-Mantelfläche ist so gewählt, dass sich das auf sie auftreffende Licht nach der Reflexion in etwa parallel zur Lichtdurchtrittsscheibe 3 vom Zentrum Z weg zur Gehäuse- Umfangswand 26 hin ausbreitet. Das Vorhandensein einer Reflektoranordnung 34 hat zur Folge, dass, wie man der Fig.16 entnimmt, die Leuchte im Bereich des Zentrums Z einen kreisförmigen, abgedunkelten Flächenbereich 36 aufweist und die Lichtquelle 6 nicht direkt sichtbar ist.

Der sich ausgehend von der Reflektoranordnung 34 zur Gehäuseumfangswand 26 und von deren Verspiegelung zurück zum Zentrum Z ausbreitende Lichtstrom trifft wieder auf eine Vielzahl von Auskoppelschichten 16", die in gleicher Weise wie unter Bezugnahme auf die Fig. 13 bis 15 beschrieben angeordnet sind, so dass an ihnen wiederum die gewünschten Auskoppeleffekte auftreten.

Ein weiterer Unterschied zu dem zuvor beschriebenen Ausführungsbeispiel besteht darin, dass die Verbindungsstege 28' in etwa mit dem gleichen Winkel gegen die Ausbreitungsrichtung des vom Zentrum Z kommenden Lichts, aber in entgegengesetzter Richtung wie die Auskoppelschichten 16" geneigt sind, so dass sich eine insgesamt zickzack-förmige Anordnung ergibt.

Diese starke Neigung der Verbindungsstege 28', die sich hier über den gesamten Umfang der Anordnung erstrecken, hat zur Folge, dass an jedem von ihnen ein Teil des sich vom Zentrum zur Gehäuseumfangswand 26 hin ausbreitenden Lichtstroms zur Rückwand 18 hin ausgekoppelt wird. Dort befindet sich ein mit dem Hohlspiegel 32 einstückig ausgebildeter Spiegel 38, der das auf ihn treffende Licht zur Lichtdurchtrittsscheibe 3 hin reflektiert. Auf der Innenseite der Gehäuseumfangswand 26 ist ein zylindrischer Spiegel 39 vorgesehen, der die gleiche Funktion besitzt, wie sie oben für die Verspiegelung der Innenfläche der Gehäuseumfangswand 26 beschrieben wurde.

Für das vom zylindrischen Spiegel 39 zum Zentrum Z zurück laufende Licht wirken die planparallel ausgebildeten, transparenten Verbindungsstege 28' in der gleichen Weise, wie die Auskoppelschichten 16" für das vom Zentrum Z nach außen laufende Licht, d. h. sie koppeln jeweils einen Anteil direkt zur Lichtdurchtrittsscheibe 3 hin aus, während die Auskoppelschichten 16" jeweils einen Anteil des zurück laufenden Lichts zum Spiegel 38 hin auskoppeln, der ihn dann zur Lichtdurchtrittsscheibe 3 hin reflektiert. Auf diese Weise wird wiederum eine Kompensation der für das hin laufende Licht mit zunehmender Entfernung vom Zentrum Z fortschreitenden Intensitätsabnahme erzielt.

Bei der vorliegenden Ausführungsform bilden die Spiegel 32, 38 und 39 eine einstückige Spiegelvorrichtung, die beim Zusammenbau von oben her in das Gehäuse 1 eingesetzt werden kann. Wie man insbesondere der Fig.17 entnimmt, ist die Reflektoranordnung 34 einstückig mit der von den Auskoppelschichten 16" und ihren Verbindungsstegen 28' gebildeten Lichtverteilungsvorrichtung 14" verbunden. Somit ergibt sich insgesamt eine aus nur wenigen Teilen bestehende Leuchte, die auf einfache und kostengünstige Weise zusammen gebaut werden kann.

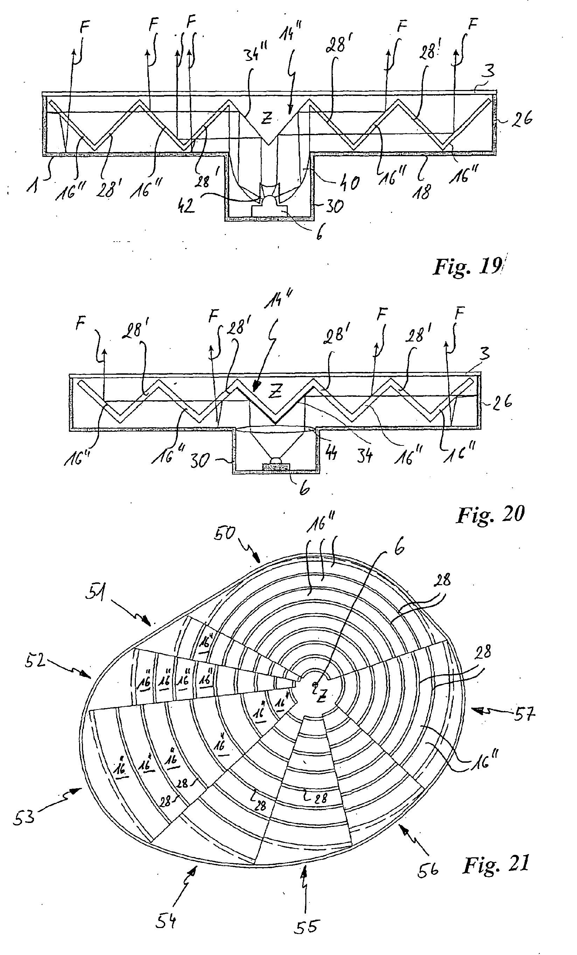

Das in Fig.18 dargestellte Ausführungsbeispiel unterscheidet sich von dem der Fig. 16 und 17 im wesentlichen dadurch, dass die zentrale Reflektoranordnung 34' nicht in die Lichtverteilungsvorrichtung 14" integriert ist sondern von dem speziell geformten Gehäuse der als Lichtquelle 6 verwendeten Leuchtdiode gebildet wird. Dieses transparente Gehäuse besitzt an seiner in der Fig.18 oben liegenden Seite eine auf die Licht emitierende Fläche der Diode gerichtete kegelförmige Vertiefung, deren Öffnungswinkel so gewählt ist, dass das in einem vergleichsweise engen Bündel auf sie von unten her auftreffende Licht durch Totalreflexion in horizontaler Richtung abgelenkt wird, so dass es sich im wesentlichen parallel zur Lichtdurchtrittsscheibe 3 durch die Lichtverteilungsvorrichtung 14" hindurch ausbreitet, die so, wie dies oben beschrieben wurde, an jeder Auskoppelschicht 16" und jedem Verbindungssteg 28' Anteile auskoppelt, die entweder direkt oder nach Reflexion an der Verspiegelung der Rückseite 18 des Gehäuses 1 durch die Lichtdurchtrittsscheibe 3 hindurch abgestrahlt werden.

Das in Fig.19 gezeigte Ausführungsbeispiel unterscheidet sich von dem der Fig.17 im wesentlichen darin, dass in die Lichtverteilungsvorrichtung 14" ein nach unten in die Gehäusevertiefung 30 ragender, kuppelförmiger Lichtleitkörper 40 integriert ist, in dessen Kuppelfläche, die der als Leuchtdiode ausgebildeten Lichtquelle 6 zugewandt ist, eine zentrale Ausnehmung 42 eingearbeitet ist, in welche das Gehäuse der Leuchtdiode 6 hineinragt. Die der Leuchtdiode gegenüberliegende Stirnfläche der Ausnehmung 42 ist in Form einer Sammellinse ausgebildet. Insgesamt sammelt der Lichtleitkörper 40 das von der Lichtquelle 6 ausgehende Licht und leitet es in Fig.19 vertikal nach oben auf seine in Form eines mit seiner Spitze nach unten weisenden Kegels ausgebildete Oberseite, die das auf sie auftreffende Licht durch Totalreflexion in horizontaler Richtung umlenkt und somit als Reflektoranordnung 34" dient. Alle übrigen Elemente sind in gleicher oder identischer Weise wie bei den Ausführungsbeispielen der Fig. 17 und 18 ausgebildet.

Gleiches gilt auch für die in Fig.20 gezeigte Ausführungsform mit der Ausnahme, dass hier eine in einen engen Raumwinkel abstrahlende Leuchtdiode als Lichtquelle 6 vorgesehen ist, in deren Strahlengang sich eine Sammellinse 44 befindet, die das von der Lichtquelle 6 ausgehende Licht parallelisiert und von unten her auf die mit der Lichtverteilungsvorrichtung 14" wieder einstückig ausgebildete Reflektoranordnung 34 wirft. Als Sammellinse 44 kann auch eine Fresnellinse Verwendung finden.

In Fig.21 ist eine Draufsicht auf eine erfindungsgemäße Leuchte dargestellt, deren Grundriß deutlich von der bisher beschriebenen Kreisform abweicht. Auch diese Leuchte besitzt ein Zentrum Z, in dem sich die Lichtquelle 6 befindet. Um dieses Zentrum herum sind Kreissegmente 50 bis 57 angeordnet, die unterschiedliche Radien besitzen. In jedem dieser Segmente ist eine eigene Lichtverteilungsvorrichtung vorgesehen, die entsprechend der in den Fig. 13 und 14 gezeigten ausgebildet ist, wobei aber die einzelnen Auskoppelschichten 16" in den verschiedenen Segmenten 50 bis 57 unterschiedliche radiale Abstände voneinander und jeweils auch vom Zentrum Z besitzen. Der Deutlichkeit halber sind nur einige der Auskoppelschicht 16" und einige ihrer Verbindungsstege 28 mit einem Bezugszeichen versehen.

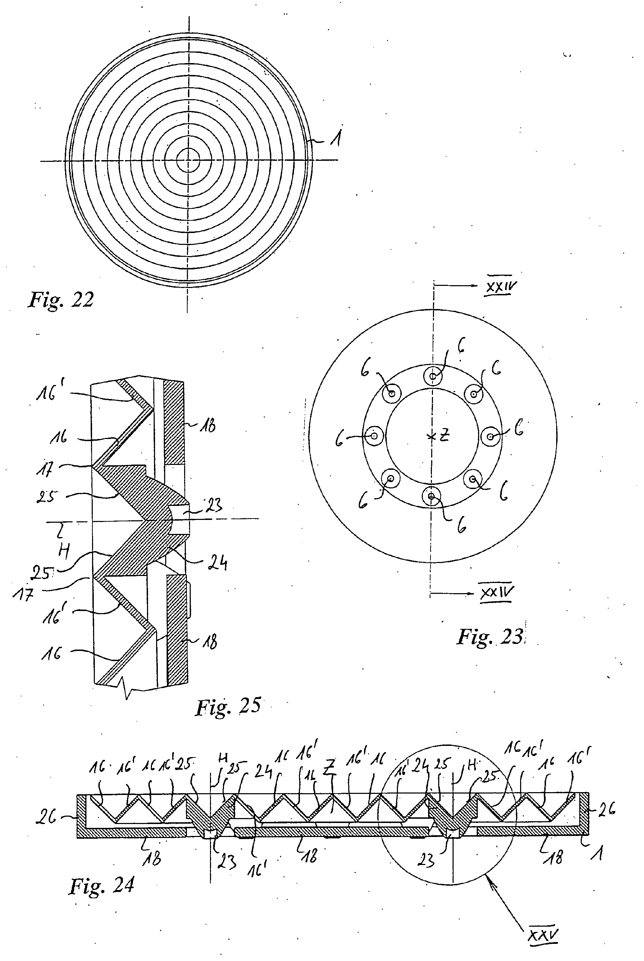

In den Fig. 22 bis 24 ist ein Ausführungsbeispiel einer kreisförmigen erfindungsgemäßen Leuchte dargestellt.

Wie man insbesondere den Fig.23 und 24 entnimmt, sind hier mehrere Lichtquellen 6 in Form von Leuchtdioden vorgesehen, die die Lichtleitanordnung 14, 14' nicht vom Zentrum Z her ausleuchten, sondern auf einem Kreis angeordnet sind, dessen Abstand vom Zentrum Z in etwa gleich dem halben Radius der Leuchte ist. Auf diese Weise sind bei dieser Leuchte acht Lichtquellen 6 vorgesehen, deren Licht jeweils über einen Lichtleitkörper 24 so in die benachbarten Lichtlenkvorrichtungen eingespeist wird, daß es sich sowohl radial nach innen als auch radial nach außen ausbreitet. Auch hier sind die Umlenkflächen 25 der Lichtleitkörper so ausgebildet, daß sie einen kleineren Teil des von hinten her auftreffenden Lichtes geradlinig hindurchtreten lassen und den Hauptteil in der in Figur 24 horizontalen Richtung umlenken.

Wie man sieht, besitzt jeder der Lichtleitkörper 24 an seiner Rückseite eine Ausnehmung 23, die zur Aufnahme der in den Figuren 24 und 25 nicht dargestellten Leuchtdioden dient. Die Leuchtdioden werden in diese Vertiefungen 23 so eingeführt, daß der Zentralstrahl des von ihnen abgegebenen Lichtbündels in etwa in Richtung der Achsen H verläuft. Die im vorliegenden Fall verwendeten Lichtleitkörper 24 unterscheiden sich von denen des in Verbindung mit den Fig. 10 bis 12 erläuterten Ausführungsbeispiels hauptsächlich dadurch, daß sie zwei Umlenkflächen 25 aufweisen, d.h. das Licht einer einzigen Leuchtdiode in zwei Richtungen, d.h. sowohl radial nach innen als auch radial nach außen umlenken. In beiden Fällen können die Lichtleitkörper 24 vorteilhafterweise mit den Auskoppelschichten 16, 16' der Lichtlenkvorrichtungen 14, 14' einstückig ausgebildet sein und gemeinsam mit diesen beispielsweise im Spritzgußverfahren hergestellt werden.

Da die Lichtlenkvorrichtungen 14, 14' auch hier wieder zickzack-förmig angeordnet sind, ist die Innenseite der Gehäuserückwand 18 verspiegelt, wie dies oben beschrieben wurde. Gleiches gilt für die Innenfläche der zylindrischen Gehäuseumfangswand 26.

Es sei ausdrücklich darauf hingewiesen, dass in den oben beschriebenen Schnittfiguren 14, 17 bis 20 und 24, 25 die tatsächlichen Strahlengänge der Übersichtlichkeit halber nur teilweise oder gar nicht wiedergegeben sind. Dem Fachmann ist klar, dass die an einzelnen Auskoppelschichten 16, 16', 16" bzw. Verbindungsstegen 28, 28' sowie an der Verspiegelung der Rückseiten 18 bzw. der Umfangswände 26 nur an einzelnen Stellen dargestellten Auskoppel- und Reflexionsvorgänge an allen entsprechenden Stellen in gleicher Weise auftreten.

Die Zwischenräume zwischen den Auskoppelschichten können statt mit Luft auch mit einem anderen Gas oder mit einem anderen festen Material gefüllt sein, das einen unterschiedlichen Brechungsindex besitzt.

Bei den Lichtquellen handelt es sich vorzugsweise um Leuchtdioden (LEDs).

Zwar sind bei einigen gezeigten Ausführungsbeispielen jeweil zwei gegensinnig verlaufende, parallelisierte Lichtbündel mit zugehöriger Lichtverteilungsvorrichtung 14 bzw. 14' dargestellt, doch ist es insbesondere bei weniger langgestreckten Fahrzeugleuchten möglich, nur ein Lichtbündel und eine Lichtverteilungsvorrichtung vorzusehen und den Helligkeitsabfall durch die in Verbindung mit den Fig. 3 und 4 jeweils für die linke und rechte Seite beschriebenen Maßnahmen oder eine Kombination hiervon zu kompensieren.

## Patentansprüche

1. Leuchte, insbesondere Kraftfahrzeugleuchte, mit einer Lichtverteilungsvorrichtung (14) in die das Licht wenigstens einer Lichtquelle (6) so eingespeist wird, dass ein Lichtstrom entsteht, der sich durch die Lichtverteilungsvorrichtung (14, 14') zunächst in etwa parallel zu einer von ihr definierten Lichtdurchtrittsfläche ausbreitet und aus dem mit Hilfe von Auskoppelstrukturen Anteile für eine Abgabe durch die Lichtdurchtrittsfläche hindurch umgelenkt werden,
**dadurch gekennzeichnet,**
**dass** die Auskoppelstrukturen mehrere in Ausbreitungsrichtung des Lichtstroms hintereinander in Abständen angeordnete Auskoppelschichten (16, 16', 16") sind, die aus einem Medium bestehen, dessen optischer Brechungsindex von dem des Mediums verschieden ist, das die Zwischenräume zwischen diesen Auskoppelschichten (16, 16', 16") erfüllt,
wobei die Auskoppelschichten (16, 16', 16") gegen die Ausbreitungsrichtung des Lichtstroms unter einem vorgegebenen Winkel so geneigt sind, dass sein Hauptteil ohne wesentliche Richtungsänderung durch sie hindurchtritt, während ein kleinerer Teil zur Lichtdurchtrittsfläche hin reflektiert wird.

2. Leuchte nach Anspruch 1, **dadurch gekennzeichnet, dass** die Lichtverteilungsvorrichtung (14, 14') in etwa linear und langgestreckt ausgebildet ist, wobei die Ausbreitungsrichtung des Lichtstroms Längsrichtung der Lichtverteilungsvorrichtung (14, 14') verläuft.

3. Leuchte nach Anspruch 2, **dadurch gekennzeichnet, dass** das Licht wenigstens einer Lichtquelle (6) von einem der Stirnenden der langgestreckten Lichtverteilungsvorrichtung (14, 14') in diese eingespeist wird.

4. Leuchte nach Anspruch 2, **dadurch gekennzeichnet, dass** das Licht wenigstens einer Lichtquelle (6) in einen mittleren Bereich der langgestreckten Lichtverteilungsvorrichtung (14, 14') in diese eingespeist wird.

5. Leuchte nach einem der vorhergehenden Ansprüche, **dadurch gekennzeichnet, dass** die Lichtverteilungsvorrichtung (14, 14') zumindest in einem Sektor (50 bis 57) auf ein Zentrum (Z) hin orientiert ist, und dass die Ausbreitungsrichtung des Lichtstroms bezüglich des Zentrums (Z) in radialer Richtung verläuft.

6. Leuchte nach Anspruch 5, **dadurch gekennzeichnet, dass** das Licht wenigstens einer Lichtquelle (6) vom Zentrum (Z) her in die Lichtverteilungsvorrichtung (14, 14') eingespeist wird.

7. Leuchte nach Anspruch 5 oder 6, **dadurch gekennzeichnet, dass** das Licht wenigstens einer Lichtquelle (6) von einem vom Zentrum (Z) radial beabstandeten Punkt her in die Lichtverteilungsvorrichtung (14, 14') eingespeist wird.

8. Leuchte nach einem der Ansprüche 5 bis 7, **dadurch gekennzeichnet, dass** die Lichtverteilungsvorrichtung um das Zentrum (Z) herum in verschiedenen Sektoren (50 bis 57) unterschiedlich ausgebildet ist.

9. Leuchte nach Anspruch 8, **dadurch gekennzeichnet, dass** in wenigstens zwei verschiedenen Sektoren (50 bis 57) die Auskoppelschichten (16") unterschiedliche radiale Abstände voneinander aufweisen.

10. Leuchte nach Anspruch 8 oder 9, **dadurch gekennzeichnet, dass** Auskoppelschichten (16") in wenigstens zwei verschiedenen Sektoren (50 bis 57) unterschiedliche radiale Abstände vom Zentrum (Z) besitzen.

11. Leuchte nach einem der vorhergehenden Ansprüche, **dadurch gekennzeichnet, dass** wenigstens eine Lichtquelle (6) in der Ebene der Lichtverteilungsvorrichtung (14, 14') angeordnet ist, dass das von ihr in Richtung der Lichtdurchtrittsfläche abgegebene Licht unmittelbar durch diese hindurch tritt, und dass das von ihr in etwa parallel zur Lichtdurchtrittsfläche abgegebene Licht den Lichtstrom durch die Auskoppelschichten (16, 16', 16") bildet.

12. Leuchte nach einem der vorhergehenden Ansprüche, **dadurch gekennzeichnet, dass** wenigstens eine Lichtquelle (6) von der Lichtdurchtrittsfläche her gesehen hinter der Lichtverteilungsvorrichtung (14") angeordnet ist und dass das von ihr ausgehende Licht durch eine Reflektoranordnung (34, 34") so umgelenkt wird, dass es den Lichtstrom durch die Auskoppelschichten (16") bildet.

13. Leuchte nach einem der vorhergehenden Ansprüche, **dadurch gekennzeichnet, dass** mehrere sich in verschiedenen Richtungen ausbreitende Lichtströme vorgesehen sind, von denen jedem eine eigene Lichtverteilungsvorrichtung (14, 14', 14") zugeordnet ist, von denen jede mehrere Auskoppelschichten (16, 16' 16") umfasst.

14. Leuchte nach Anspruch 13, **dadurch gekennzeichnet, dass** sich wenigstens zwei der Lichtströme aufeinander zu ausbreiten.

15. Leuchte nach Anspruch 14, **dadurch gekennzeichnet, dass** sich die wenigstens zwei der Lichtströme zumindest teilweise durchdringen.

16. Leuchte nach Anspruch 15, **dadurch gekennzeichnet, dass** die den wenigstens zwei Lichtströmen zugeordneten Lichtverteilungsvorrichtungen (14, 14') ineinander verschachtelt angeordnet sind, und dass auf der der Lichtdurchtrittsfläche gegenüberliegenden Seite der beiden Lichtverteilungsvorrichtungen (14, 14') eine Reflexionseinrichtung vorgesehen ist, welche die Teile eines jeden Lichtstroms, die von den Auskoppelschichten (16; 16') der zum jeweils anderen Lichtstrom gehörenden Lichtverteilungsvorrichtung (14, 14') zu ihr hin reflektiert werden, zur Lichtdurchtrittsfläche hin zurückwirft.

17. Leuchte nach Anspruch 13, **dadurch gekennzeichnet, dass** sich wenigstens zwei der Lichtströme voneinander weg ausbreiten.

18. Leuchte nach einem der Ansprüche 13 bis 17, **dadurch gekennzeichnet, dass** wenigstens zwei der Lichtströme von ein und derselben Lichtquelle (6) abgeleitet sind.

19. Leuchte nach einem der Ansprüche 13 bis 17, **dadurch gekennzeichnet, dass** jeder der mehreren Lichtströme von einer eigenen Lichtquelle (6) abgeleitet ist.

20. Leuchte nach einem der vorhergehenden Ansprüche, **dadurch gekennzeichnet, dass** für jede Lichtquelle (6) eine optische Abbildungsvorrichtung (9) vorgesehen ist, die den Lichtstrom vor der Einspeisung in die zugehörige Lichtverteilungsvorrichtung (14, 14') in etwa parallelisiert.

21. Leuchte nach einem der vorhergehenden Ansprüche, **dadurch gekennzeichnet, dass** zu verschiedenen Lichtströmen gehörende Lichtverteilungsvorrichtungen (14, 14') von der Lichtdurchtrittsfläche her gesehen nebeneinander angeordnet sind.

22. Leuchte nach einem der Ansprüche 1 bis 20, **dadurch gekennzeichnet, dass** zu verschiedenen Lichtströmen gehörende Lichtverteilungsvorrichtungen (14, 14') von der Lichtdurchtrittsfläche her gesehen hintereinander angeordnet sind.

23. Leuchte nach einem der vorhergehenden Ansprüche, **dadurch gekennzeichnet, dass** die Auskoppelschichten (16, 16') einer Lichtverteilungsvorrichtung (14, 14') zu Gruppen zusammengefasst sind, die in Ausbreitungsrichtung des zugehörigen Lichtstroms voneinander im Abstand angeordneten sind, und dass die Anzahl von Auskoppelschichten (16, 16') je Gruppe mit zunehmender Entfernung von der Einspeisestelle in die betreffende Lichtverteilungsvorrichtung (14, 14') zunimmt.

24. Leuchte nach Anspruch 23, **dadurch gekennzeichnet, dass** die Abstände von einander benachbarten Gruppen von Auskoppelschichten (16, 16') mit zunehmender Entfernung von der Einspeisestelle in die betreffende Lichtverteilungsvorrichtung (14, 14') abnehmen.

25. Leuchte nach einem der Ansprüche 1 bis 22, **dadurch gekennzeichnet, dass** die Abstände von einander benachbarten Auskoppelschichten (16, 16') einer Lichtverteilungsvorrichtung (14, 14') mit zunehmender Entfernung von von der Einspeisestelle abnehmen.

26. Leuchte nach einem der vorhergehenden Ansprüche, **dadurch gekennzeichnet, dass** die Auskoppelschichten (16, 16') von dünnen Platten eines transparenten Materials gebildet werden, dessen optischer Brechungsindex von dem des sie umgebenden Mediums verschieden ist.

27. Leuchte nach Anspruch 26, **dadurch gekennzeichnet, dass** die Auskoppelschichten (16, 16') einstückig miteinander verbunden sind.

28. Leuchte nach Anspruch 27, **dadurch gekennzeichnet, dass** zwischen den Auskoppelschichten (16, 16') sich quer zur Ausbreitungsrichtung des jeweiligen Lichtstroms erstreckende, dünne Verbindungsstege (28, 28') aus einem transparenten Material so vorgesehen sind, dass sich im Schnitt eine zickzack-förmige Anordnung ergibt.

29. Leuchte nach Anspruch 28, **dadurch gekennzeichnet, dass** die dünnen Verbindungsstege (28, 28') gegen die Ausbreitungsrichtung des auf sie auftreffenden Lichtstroms so geneigt sind, dass das durch sie hindurchtretende Licht seine Ausbreitungsrichtung im wesentlichen beibehält.

30. Leuchte nach Anspruch 28, **dadurch gekennzeichnet, dass** die dünnen Verbindungsstege (28, 28') gegen die Ausbreitungsrichtung des auf sie auftreffenden Lichtstroms so geneigt sind, dass sie einen Teil hiervon in einer der Lichtdurchtrittsfläche entgegengesetzten Richtung auskoppeln und dass von der Lichtdurchtrittsfläche her gesehen hinter der Lichtverteilungsvorrichtung (14") ein Reflektor (38)angeordnet ist, der dieses Licht zur Lichtdurchtrittsfläche hin zurückwirft.

31. Leuchte nach Anspruch 28, **dadurch gekennzeichnet, dass** die dünnen Verbindungsstege (28) senkrecht zur Ausbreitungsrichtung des auf sie auftreffenden Lichtstroms schmal ausgebildet sind, so dass sie wenigstens einen in Ausbreitungsrichtung des auf sie auftreffenden Lichtstroms verlaufenden Steg bilden.

32. Leuchte nach Anspruch 27, **dadurch gekennzeichnet, dass** die Auskoppelschichten (16, 16') durch sich außerhalb des Lichtstroms in dessen Ausbreitungsrichtung erstreckende Verbindungsstege miteinander verbunden sind.

33. Leuchte nach einem der Ansprüche 1 bis 25, **dadurch gekennzeichnet, dass** das Medium der Auskoppelschichten (16, 16') Luft und das die Zwischenräume erfüllende Medium ein transparentes Festkörpermaterial ist.

34. Leuchte nach Anspruch 33, **dadurch gekennzeichnet, dass** die Auskoppelschichten (16, 16') als Schlitze in einem einstückigen aus dem Festkörpermaterial bestehenden Körper ausgebildet sind.

35. Leuchte nach einem der vorhergehenden Ansprüche, **dadurch gekennzeichnet dass** alle Auskoppelschichten (16, 16') die gleichen optischen Eigenschaften besitzen.

36. Leuchte nach einem der vorhergehenden Ansprüche, **dadurch gekennzeichnet, dass** der Lichtstrom nach Durchlaufen mehrerer Auskoppelschichten (16, 16') auf eine verspiegelte Fläche (20, 20') trifft, die gegen die Längsrichtung des Lichtstroms unter einem vorgegebenen Winkel so geneigt ist, dass sie das verbliebene, auf sie auftreffende Restlicht zur Lichtdurchtrittsfläche hin reflektiert.

37. Leuchte nach einem der Ansprüche 1 bis 35, **dadurch gekennzeichnet, dass** der Lichtstrom nach Durchlaufen mehrerer Auskoppelschichten (16, 16') auf eine verspiegelte Fläche (20) trifft, die ihn so reflektiert, dass die Ausbreitungsrichtung des reflektierten Lichtstroms in etwa der des ankommenden Lichtstroms entgegengerichtet ist, und dass auf der der Lichtdurchtrittsfläche gegenüberliegenden Seite der Lichtlenkvorrichtung (14, 14') eine Reflexionseinrichtung vorgesehen ist, welche die Teile des reflektierten Lichtstroms, die von den Auskoppelschichten der durchlaufenen Lichtlenkvorrichtung zu ihr hin ausgekoppelt werden, zur Lichtdurchtrittsfläche hin zurück wirft.

38. Leuchte nach einem der vorhergehenden Ansprüche, **dadurch gekennzeichnet, dass** zumindest eine der Auskoppelschichten (16, 16') eine in etwa planparallele Schicht ist

39. Leuchte nach einem der vorhergehenden Ansprüche, **dadurch gekennzeichnet, dass** zumindest einer der Auskoppelschichten (16, 16') eine im Querschnitt einem Polygonzug folgend gekrümmt parallele Schicht ist.

40. Leuchte nach einem der vorhergehenden Ansprüche, **dadurch gekennzeichnet, dass** zumindest einer der Auskoppelschichten (16, 16') eine im Querschnitt stetig gekümmt Schicht ist, deren Vorder- und Rückseite zueinander in etwa mit gleichbleibendem Abstand verlaufen.

41. Leuchte nach einem der vorhergehenden Ansprüche, **dadurch gekennzeichnet, dass** zumindest zwei Auskoppelschichten (16, 16') so ausgebildet sind, dass die von ihnen ausgekoppelten Lichtstromteile zueinander in etwa parallel verlaufen.

42. Leuchte nach einem der vorhergehenden Ansprüche, **dadurch gekennzeichnet, dass** zumindest zwei Auskoppelschichten (16, 16') so ausgebildet sind, dass die von ihnen ausgekoppelten ausgekoppelten Lichtstromteile in voneinander verschidenen Richtungen verlaufen.
